Europäisches Patentamt

(19) European Patent Office

Office européen des brevets

(11) Veröffentlichungsnummer: **0 054 081**
A1

## (12) EUROPÄISCHE PATENTANMELDUNG

(21) Anmeldenummer: **80107942.7**

(22) Anmeldetag: **16.12.80**

(51) Int. Cl.³: **H 02 K 57/00**

(43) Veröffentlichungstag der Anmeldung:
23.06.82 Patentblatt 82/25

(84) Benannte Vertragsstaaten:
AT BE CH DE FR GB IT LI LU NL SE

(71) Anmelder: **GESIG Energie-Technik GmbH**
**Postfach 1323 Nürnberger Strasse 6**
**D-8540 Schwabach(DE)**

(72) Erfinder: **Geiger, Otto Josef**
**Städtler Strasse 10**
**D-8540 Schwabach(DE)**

(54) Drilling-Motor-Generator in Kompaktbausatz mit getakteten Triacs.

(57) Mit diesem getakteten Motor - Generator - Typ ist ein neues Energieprogramm erschlossen worden, durch die Ausnützung der Vorgänge in den getrennten Generatorteilen und in den getrennten Motorteilen, unter Einsatz der Taktung im jeweiligen Zeitpunkt konnte dieser Elektro - Motor - Generator erschaffen werden.

Die Besonderheit liegt darin, daß durch Umwandlung von mechanischer Energie in elektrische Energie eine enorme Einsparung an fremdzugeführter Energie gewährt wird.

Aufgrund dieses neuen Prinzips kann ein sehr hoher wirtschaftlicher Effekt erzielt werden.

Die volkswirtschaftliche Bedeutung zur Anwendung dieses Generators ist vielseitig anwendbar - in der Industrie, im Haushalt, für den Wohnbau und für Fahrzeuge aller Art.

Der neuartige Motor - Generatortyp wird durch die Nachfrage der Produkte und durch die besonderen Merkmale den Weltmarkt erschließen.

Die Bauteile zur Ausführung dieser neuartigen Generatoren weisen gegenüber bisher technisch bekannten Generatoren eine völlig neue Gestaltung auf.

Die Leistungsgrößen sind bedingt durch die erforderliche Energiebedarf und können durch jede Baugröße erstellt werden.

Da es sich jedoch um einfach produzierende Bauteile handelt, können die verwendeten Bauteile im Baukastensystem hergestellt werden.

Die Fertigung dieser Motor - Generatoren kann mit herkömmlichen Maschinenpark vollzogen werden.

BEZEICHNUNG GEÄNDERT
siehe Titelseite

– 1 –

---

DRILLING – MOTOR – GENERATOR  synchron

in Kompaktbausatz mit getakteten Triacs ( bidirektionale ) Thyristortrioden

---

Die Erfindung betrifft einen elektrischen Drilling – Motor – Generator in Kompaktbausatz mit getakteten Triacs ( bidirektionale ) Thyristortrioden, der mit drei Statoren radial und sechs Statoren axial ausgestattet ist, wobei drei Rotoren radiale und axiale Funktionen ausführen.

Der Erfindung liegt die Aufgabe zugrunde, einem Drilling – Motor – Generator in Kompaktbausatz mit getakteten Triacs ( bidirektionale ) Thyristortrioden mit hoher elektrischer Leistung in einfachem Aufbau zu schaffen.

Geschäftsführer: Otto Geiger, Schwabach, Telefon (09122) 84181 – Gesellschafter: Otto Geiger, Schwabach; Ernst Sigerl,

- 2 -

Eine entsprechende Ausgestaltung der Bauelemente wird durch die getaktete Motor - Generator - Drilling - Kompination erfüllt.

Da bei der Umwandlung von mechanischer Energie
in elektrische Energie eine enorme Einsparung
an mechanischer Energie aufgewiesen wird.

Die Lösung der gestellten Aufgabe besteht darin, daß alle Bauteile einfache Herstellungsformen nachweisen und radial und axial auszuführen sind.

Durch die Taktung des Motor - Generators tritt
bei Belastung des Generators motorische Eigenkraft durch eigenes umlaufendes Spannungsfeld
zu gegebenem Zeitpunkt auf.

Diese Generatorbauart kann in unterschiedlicher
Leistungsgröße erstellt werden, wobei die Leistungsgröße nach oben nicht eingeschränkt ist.

Eine zweckmäßige Ausgestaltung besteht darin,
daß einzelne Bauteile radial und axial Verwendung finden, wobei die radialen und axialen
Teile der gleichen Funktion unterliegen.
Im Drillingsprogramm wird abwechselnd durch das
umlaufende Feld, je nach Belastung des Generators, die eigene motorische Unterstützung gewährt.

Eine weitere vorteilhafte Ausführungsform ist
es, daß man Dauermagnete und Elektromagnete
je nach gewünschter Leistungsgröße ausführen

- 3 -

kann.

Die Supraleitung kann in jeder technisch bekannten Art angewendet werden ( Helium, Niobzirkon etc. )

Eine weitere zweckmäßige Ausgestaltung des Motor - Generators ist es, daß die Statoren außerhalb des Gehäuses fertiggewickelt werden können, entweder mit Spulengehäuse oder mit Rahmenwicklung, welche einzeln im Steckverfahren auszuführen sind.

Eine weitere vorteilhafte Ausführungsform ist die Ausstattung der Läufer durch einfache Bauweise im Spritzgußverfahren, die unter Verwendung von Permanentmagneten in einem Gesamtkäfig gegossen werden können.

Bei diesem Spritzgußverfahren durch Einsetzen der Permanentmagnete in der jeweiligen Form sind nur sehr geringe Nacharbeitungsvorgänge nötig.

Eine besondere Ausführung weist ein Steckverfahren auf, das zur Verwendung von Elektromagneten auf den Läufer gewählt wurde.

Eine weitere zweckmäßige Ausgestaltung besteht darin, daß die einzelnen Ständer im Eisenkern nicht zusammenwirken und somit ihre Eigenständigkeit beibehalten.
Da die Ständereisenkerne radial und axial nicht zusammenwirken, wird die eigenständige Drillings-

– 4 –

funktion des Motor – Generators geschaffen.

Eine weitere vorteilhafte Anwendung liegt in der Ausgestaltung der Polschuhe. Querschnittsmäßig muß der magnetische Fluß des Ankerquerfeldes radial und axial in einem optimalen Schritt liegen, um eine entsprechende elektrische Energie zu gewähren und auch im getakteten Teil durch das umlaufende Feld, ein kräftiges Drehmoment ausüben zu können.

Eine weitere zweckmäßige Ausführungsform ist bedingt durch die von der Firma Gesig Energietechnik GmbH angewandte Triacs ( bidirektionale ) Thyristortriodenschaltung.
Dieses Programm kann auch in konventioneller Bauart durch das Stromwendeverfahren erstellt werden und mit herkömmlichen Kohlenbürstenhalterungen ausgestattet werden.

Die getakteten Impulse des genannten Motor – Generators werden abgetastet und im jeweiligen Programm durch den Motor eingespeist und vom Generator abberufen.

Eine weitere vorteilhafte Ausführungsform besteht darin, daß die drei in sich geschlossenen Systeme von WIRKUNG – GEGENWIRKUNG – NEUTRALE ZONE in der Weise miteinander gekoppelt werden, daß sich zum gleichen Zeitpunkt durch Wirkung und Gegenwirkung  z w e i  Teile neutralisieren.

- 5 -

Der **d r i t t e** Teil ist um 15 Grad versetzt in Drehrichtung. Diese drei Teile sind starr miteinander verbunden und bleiben in der neutralen Zone durch die Symmetrie.

Aufgrund dieses Vorganges bleiben die Wirkungen frei und jede für sich wirksam.

Eine besondere Effektivität wird dadurch erzielt, daß man diese drei Wirkungen noch addieren kann ( z. B.: elektrisch - mechanisch, oder umgekehrt ), so bekommt man die Summe der Wirkung ohen Gegenwirkung **f r e i** zur Verfügung.

Im vorliegenden Fall werden drei voneinander unabhängige magnetische Kreise starr verbunden. Zum Zwecke einer induktiven Erzeugung von elektrischer Spannung werden drei gegeneinander bewegte Teile ( Stator - Rotor ) optimal energetisch ausgenützt.

Wegen der Symmetrie der drei Magnetkreissysteme müssen die magnetisch wirksamen Pole in Fläche ( Quadratzentimeter ) und Stärke ( Tesla ) gleich sein.
Nach der Theorie kommt es dabei auf die Gleichheit der pro Zeiteinheit geschnittenen Kraftlinien an.

Eine weitere vorteilhafte Ausführungsform ist es, daß die Anordnung von Polen und Polfolgen sowie Spulen und deren Verknüpfungen in den drei Ständern, die zum jeweilig beabsichtigten Zweck angepaßt sind, eine variable Vielfalt aufweisen.

- 6 -

Die Polpaaranordnung kann nur in dem betref - fenden Bezugssystem ( Drehstrom, Wechselstrom, Gleichstrom ) beschrieben werden.

Ein optimaler Ablauf des Drillingssystemes wird dadurch gewährleistet, indem die Magnetsysteme so gewählt werden müssen, daß deren Summe bei jedem Bewegungsabschnitt gleich Null ist.

Der Energieinhalt einer Volumeneinheit ist meist entscheidend für die konstruktive Gestaltung von Energieübertragungsanlagen ( Drilling - Motor - Genrrator ) mit permanentmagnetisch bestückten Läufern.
Die permanentmagnetisch potentielle Energie läßt sich nach dem neuesten Stand der Technik bis zu einer gewissen Größe, die von der Technologie ( Herstellungsverfahren ) abhängt, besser durchführen als mit Elektromagneten.

Bis zu einer Leistungsgröße von 2.500 Watt ist die Verwendung von Permanentmagneten zu empfehlen. Bei darüber hinausgehenden Leistungsträgern muß die technische Voraussetzung ermittelt werden, um die optimale Ausnutzung entweder durch den Einsatz von Elektromagneten oder durch den Einsatz von Permanentmagneten zu erreichen.

Die Energiedichte ist bis zu einer bestimmten Größe durch Permanentmagnete zweckmäßiger ausführbar als durch Elektromagnete.

- 7 -

Durch die besonders gewählte Anordnung des
Drilling - Generator - Magnetsystems wird
der Leerlauf der Welle frei vom Drehmoment;
so ist dieser Zustand bis zu einer Energiebelastung aufrecht zu erhalten. Diese Energiebelastung darf die potentielle Energie in
den Permanentmagneten nicht überwiegen.

– 8 –

Im folgenden wird die Erfindung Drilling –
Motor – Generator – synchron in Kompaktbausatz mit getakteten Triacs ( bidirektionale )
Thyristortrioden anhand von einem Ausführungsweg der dargestellten Zeichnungen näher erläutert.  Es zeigt

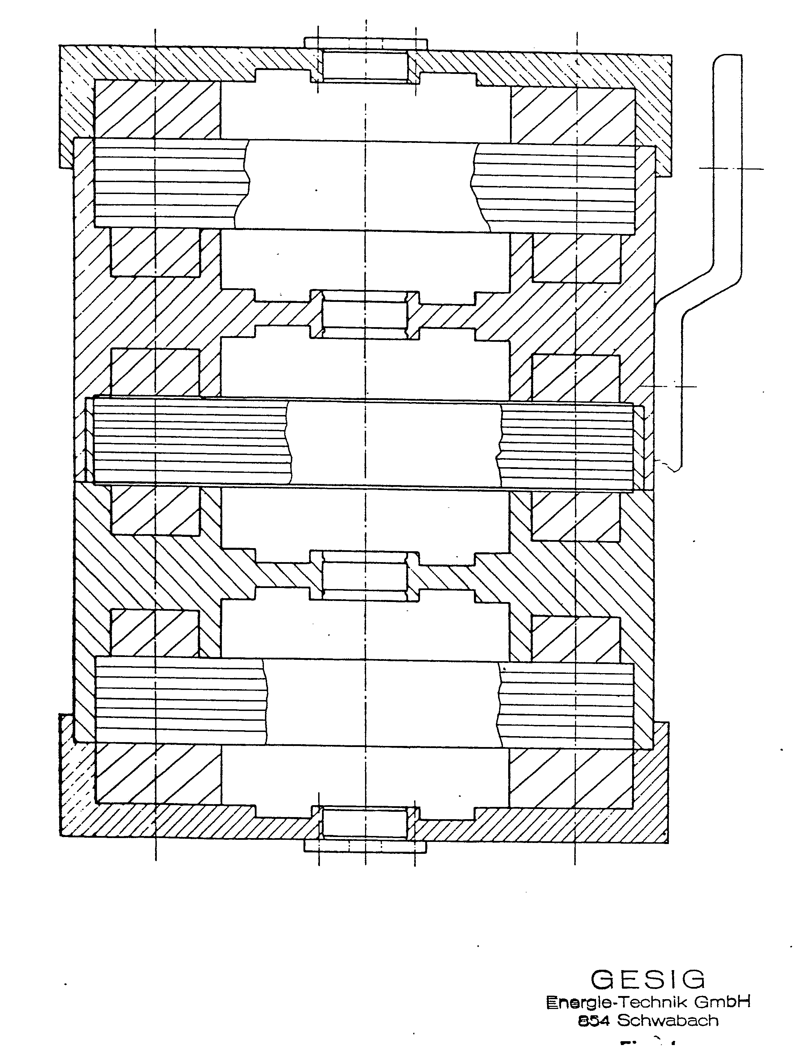

Figur 1 das Gesamtgehäuse mit der erkennbaren
Spulenwicklung radial sowie auch axial. ·
In der Figur sind die einzelnen radial und
axial getrennten Jochfeldringe und deren Hauptpole und Wicklungen dargestellt, wobei die radialen und axialen Ständer im magnetischen
Kreis getrennt sind, im Erregerstrom jedoch
gemeinsam wirken.

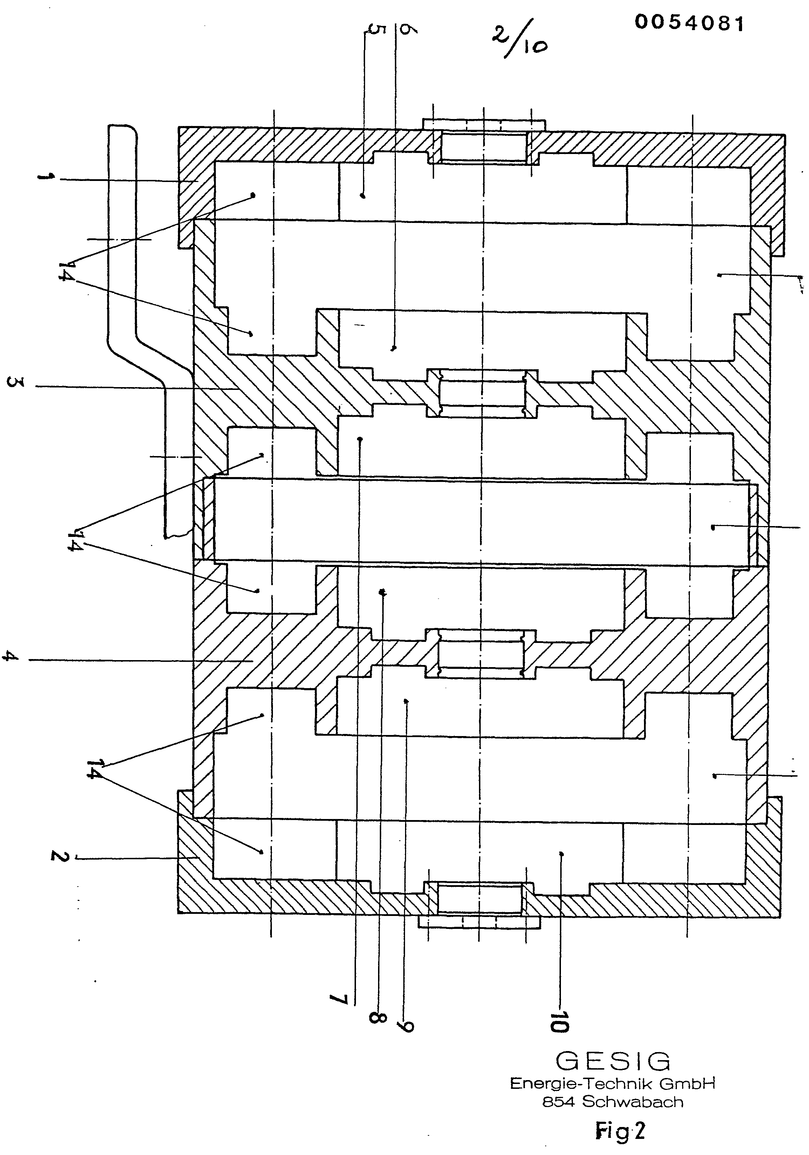

Figur 2 den Baukörper eines Drilling – Motor –
Generators, bestehend aus drei Teilmotoren und
drei Teilgeneratoren, die wiederum zwei Lagerschilder und zwei Gehäuseträger enthalten.

In den Lagerschildern 1 und 2 sind sechs axiale
Ständer angeordnet, die fortlaufend von 5 bis
einschließlich 10 beziffert sind.
In den Gehäuseträgern 3 und 4 befinden sich die
drei radial angeordneten Ständer mit den Nummern
11, 12, und 13.

Die Zahl 14 beinhaltet die Hohlräume zur Aufnahme von den radialen und axialen Ständern für
die Wickelkörper.

- 9 -

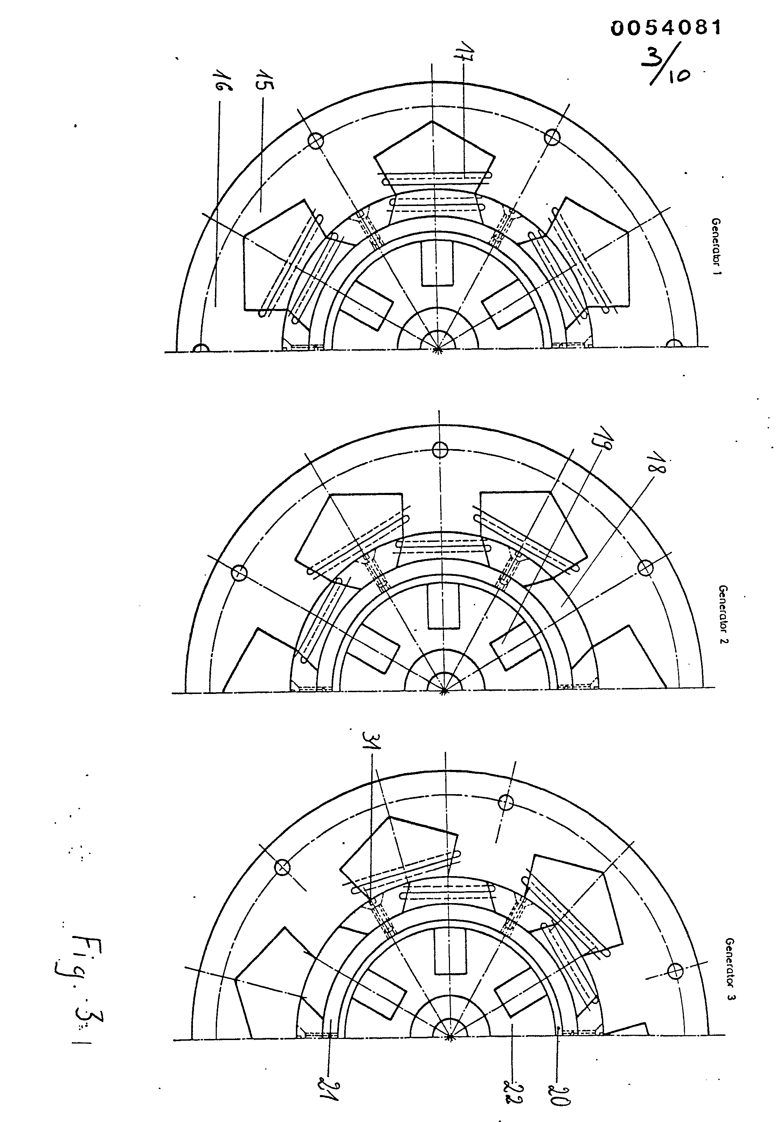

Figur 3 den schematischen Teilabschnitt über die radialen Paketständer 15 und die lamellierten Bleche 16, die Ständerwicklung 17 - radialer und axialer Art, mit aufgesetzten Permanentmagneten 18 oder Steckmagneten 19.

Der Aluminium-Isolierring 20 trennt den radialen und axialen magnetischen Fluß. Der Jochfeldring 21 gewährleistet den radialen Fluß. Die angebrachten Halterungen für die Permanentmagnete 31 trennen zu gleicher Zeit auch die Pole. Der Rotor 22 ist mit Permanentmagneten 31 ausgerüstet in radialer wie auch axialer Art.

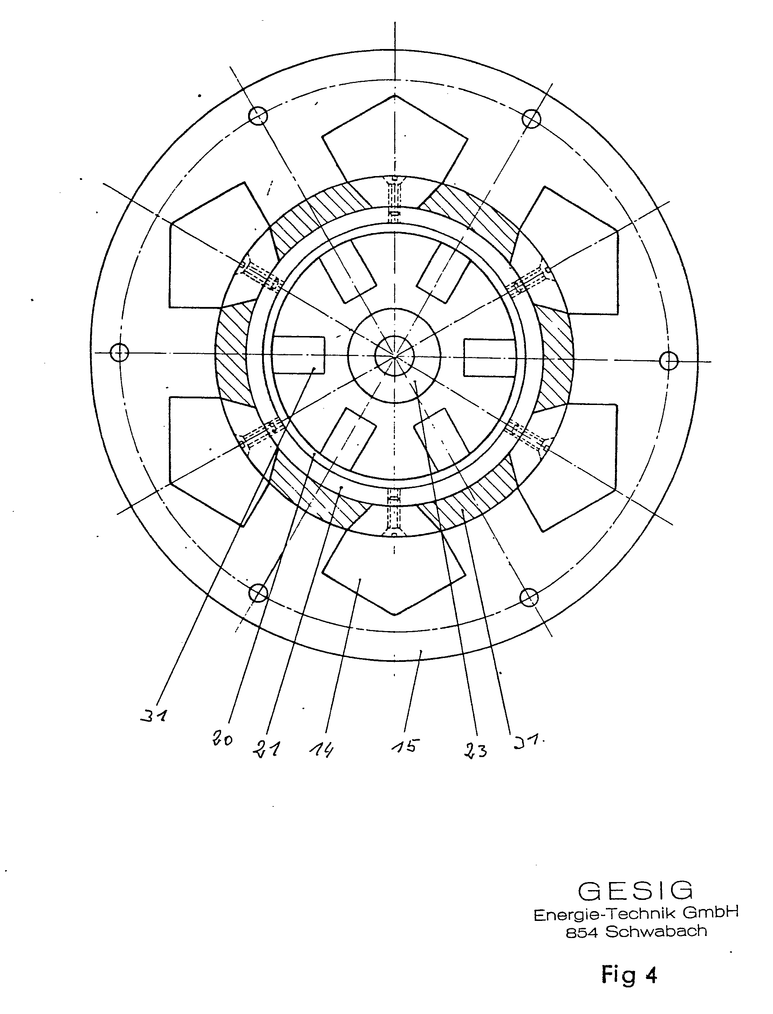

Figur 4 den Läufer 23 mit Permanentmagnet-Bestückung sowie Eisen-Jochfeldring 21 und Aluminium-Isolierring 20.

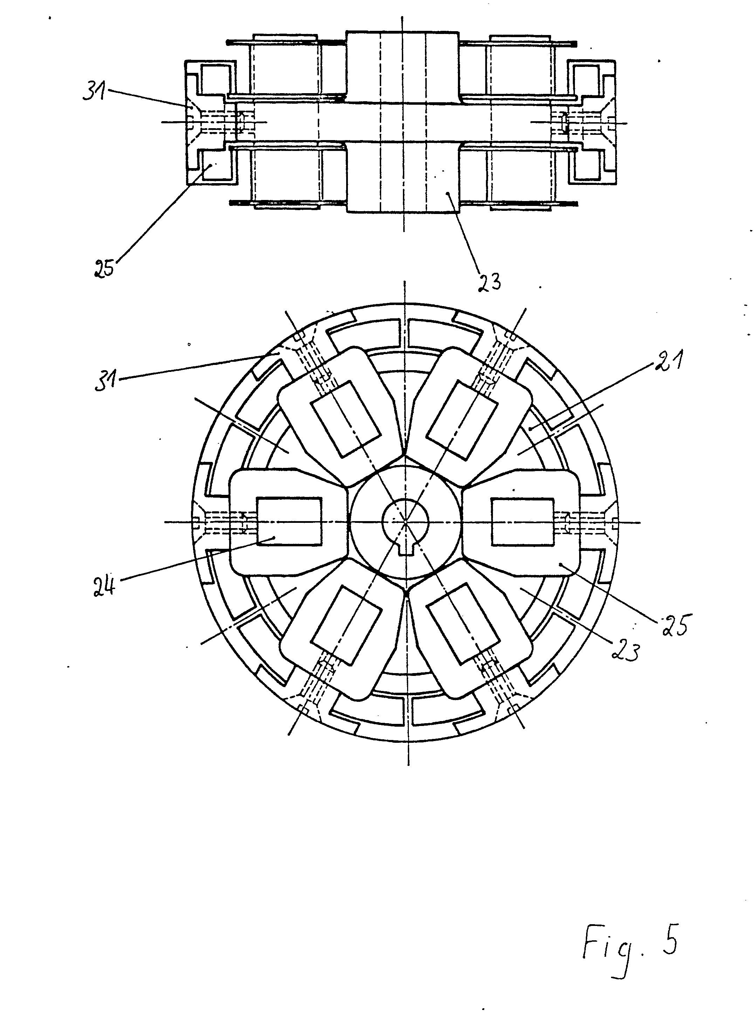

Figur 5 den Läufer 23 mit lamellierten Elektromagneten 24 und aufsteckbaren Spulenkörper 25 sowie Jochfeldring 21.

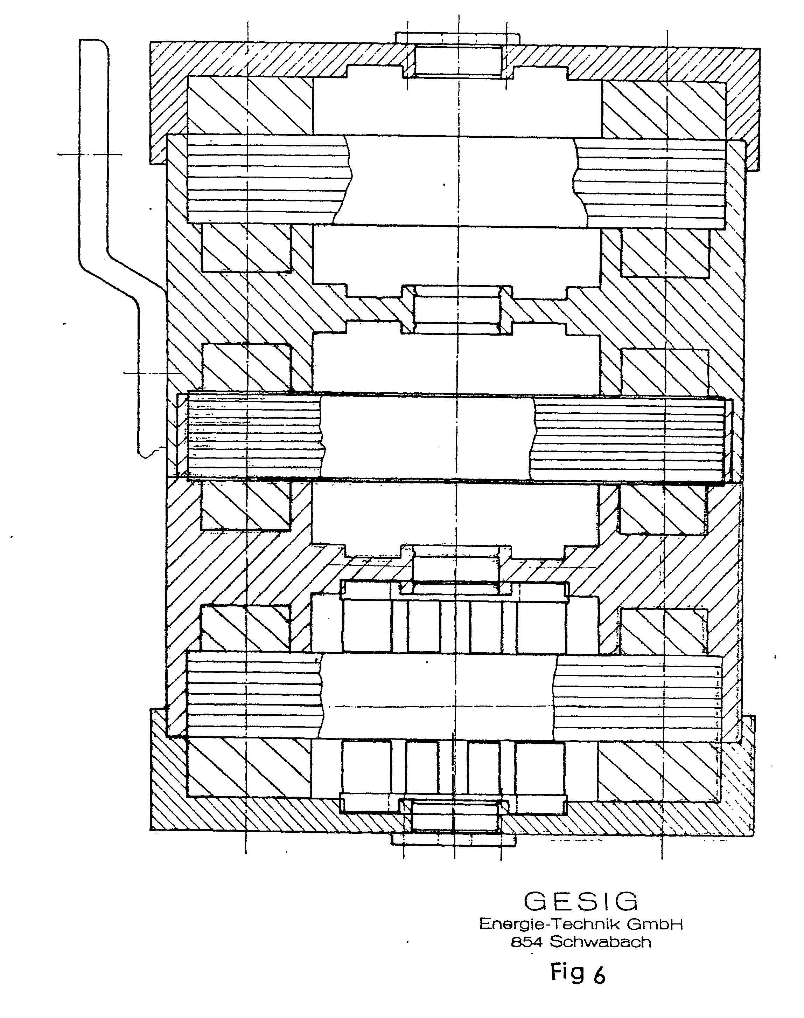

Figur 6 die radiale und axiale elektromagnetische Flußrichtung in den drei Teilgeneratoren beziehungsweise Teilmotoren 26, 27 , und 28 für die getaktete Zeitpunktangabe mit den speziell dazugehörigen Schaltplänen.

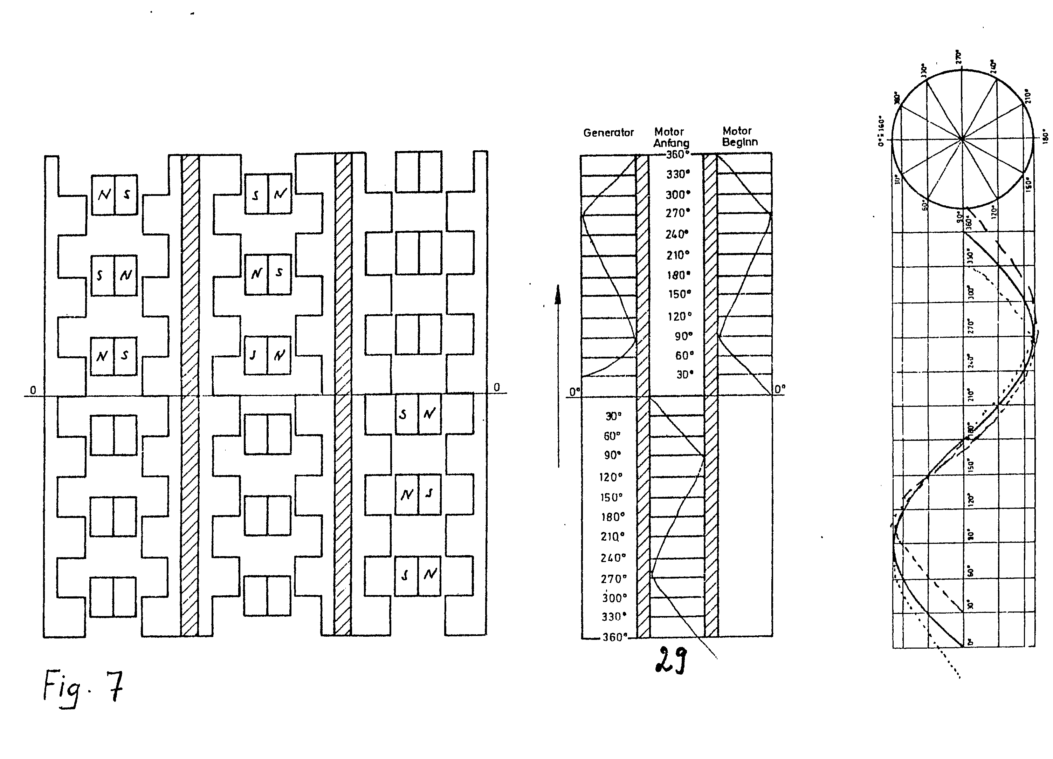

Figur 7 die Zusammenknüpfung der radialen und axialen Funktionsmerkmale des Motor - Generators und die getaktete Schaltung 29.

- 10 -

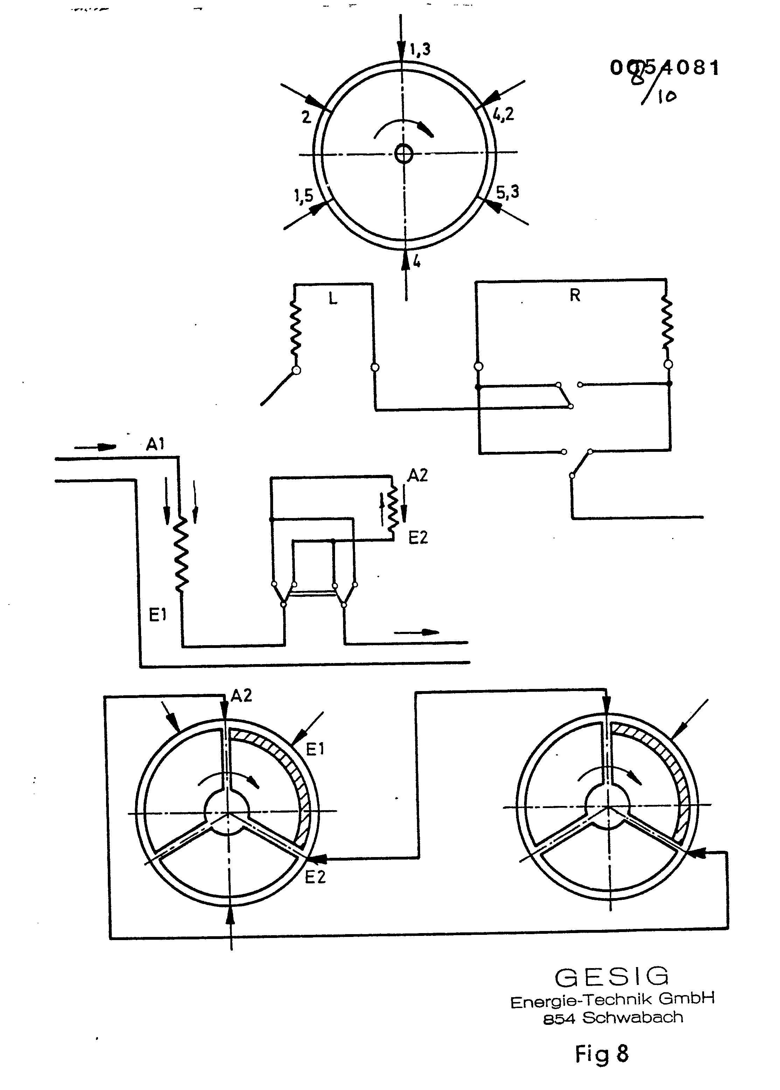

Figur 8 das getaktete Triacs ( bidirektionale )
Thyristortriodensystem 30, den Zeitplan für das
rhytmisch abwechselnde Motor - Generator -
Prinzip ( synchron ).

In den einzelnen Ständern kommt das Drehmoment
zur Geltung.

Im Zustand Generator / Last wirkt Motor / Drehmoment.

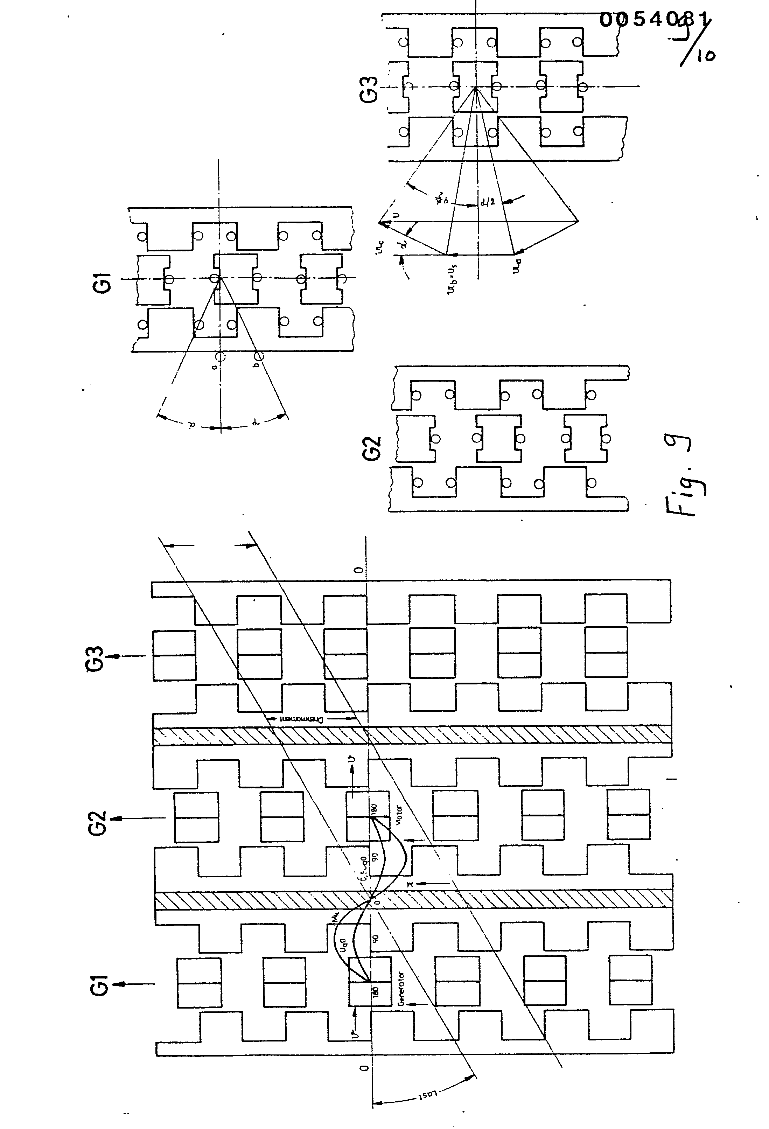

Figur 9 die zeichnerische Darstellung im Ablauf
von Wirkung und Gegenwirkung zur Ausnutzung im
bestimmten Zeitpunkt des Drehmoments.
Die Funktion zur Darstellung der Schwerpunktkoordinate in der jeweiligen Last- und Drehmomentphase wird durch die unabdingbare Notwendigkeit der rhytmischen Wirkung in der dreiteilig
von einander unabhängigen Motor - Generator -
Anordnung gewährleistet.

Durch die jeweils erforderliche Belastung des
Generators wird der optimale Drehmoment ausgelöst zur Unterstützung der fremdaufgenommenen
mechanischen Energie.

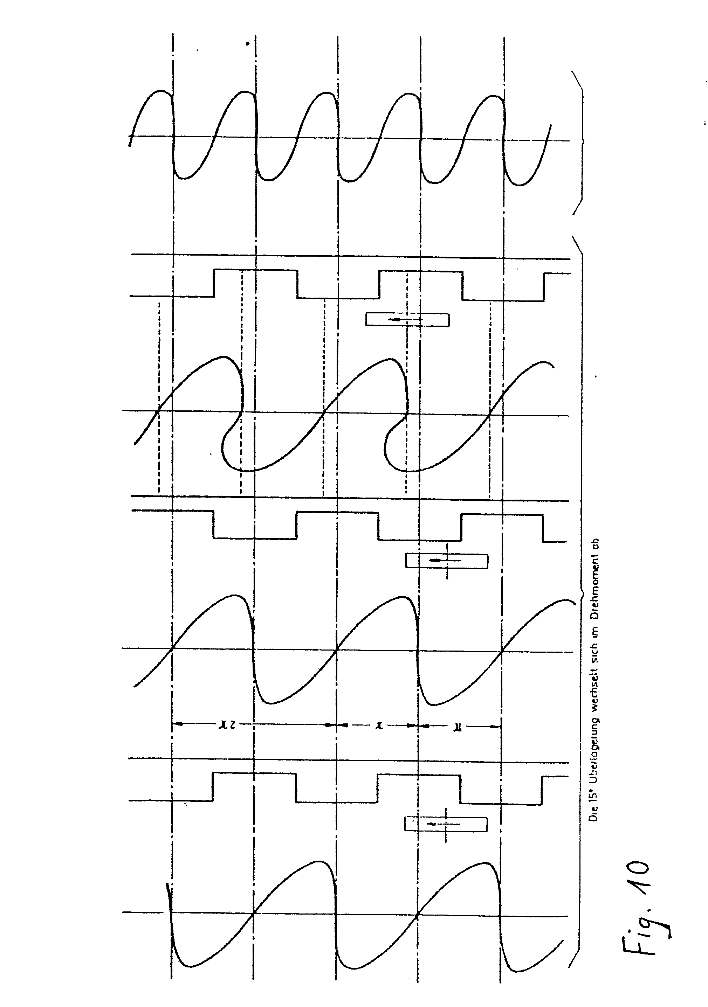

Figur 10 durch das Öffnen der Erregerströme im
Generatorteil A sind elektromagnetische Kräfte
sinusartig gleich groß. Diese erzeugten Kräfte
werden auf den Motor A übertragen und durch die
Versetzung von 120 Grad und durch die Wirkung des Drehmoments das einen Vorlauf von 15 Grad auslöst, wird der Teilmotor B auf 135 Grad weitergeleitet.

Der gleiche Vorgang wird in den beiden anderen Teilgeneratoren und Teilmotoren periodisch durch die Voraussetzung der feststehenden Teile ( Ständer ) und der bewegten Teile ( im Rotor ) wiederholt.

Dieser Drehmoment-Vorlauf wird durch die getaktete Triacs ( bidirektionale ) Thyristortriodenschaltung gesteuert, um den gleichmäßigen Rhytmus im Umlauf abwechselnd in den einzelnen Motor – Generator – Teilen A, B und C aufrecht zu erhalten.

Diese Wirkung der Umwandlung von mechanischer Energie in elektrische Energie gewährleistet enorme Einsparung an mechanischer Fremdenergie.

- 1 2 -

Die Pole bilden sich erst dann, wenn durch die Wicklungen Ströme fließen, da die Ströme in den Drei radialen Ständern 11, 12, und 13 sowie in den sechs axialen Ständern 5, 6, 7, 8, 9, 10, die Strenge der Drehstromwicklung um 120 Grad gegeneinander an der Phase verschieben, wenn Drehstrom durch Drehstromwicklung entsteht.

Die Lage des Magnetfeldes bei einer Drehstromwicklung ist so gekennzeichnet, daß bei dieser Art von Motor - Generatoren mit den getakteten Ständern radial und axial, durch die Verknüpfung der Wicklung in den einzelnen Ständern, verschiedene Zeitpunkte auftreten.

Die Anordnung des Drilling - Motor - Generators in Kompaktbausatz mit getakteten Triacs ( bidirektionale ) Thyristortrioden ist so ausgeführt, daß der Läufer 23 durch die Verknüpfung und durch die Taktung 29 im jeweiligen Zeitpunkt seiner Drehzahl 15 Grad ( 135 Grad ) dem Drehfeld um einen größeren Lastwinkel voreilt.

Durch die Kraftwirkung auf den Läufer 23 wird durch den Wechsel des Drehfeldes in den einzelnen Teilgeneratoren so radial wie auch axial, im jeweilig bestimmten Zeitpunkt, das Drehmoment im gleichen Verhältnis wie die Spannung ausgeübt.

Das Betriebsverahlten des Drilling - Motor - Generators und die induzierte Spannung des Motor - Generators in Kompaktbausatz mit getakteten Triacs ( bidirektionale ) Thyristortrioden hängt vom Erregerstrom und von deren Drehzahl ab.

Mit zunehmendem Erregerstrom bei Ausstattung der Elektromagnetläufer 23 tritt je nach Bau- größenordnung der gewünschte Sättigungsgrad ein.

Durch diesen Vorgang in dem Motor - Generator mit der getakteten und zeitabgestimmten Wander- funktion in den einzelnen radialen und axialen Ständern sowie durch die Programmierung der Taktung 29 bleibt der Drilling - Motor - Generator ein unabhängiger - frei von Belastung - Energieträger. Selbstverständlich ist die Grenze zur Ausschöpfung der Energie, wie vorliegend technische Erkenntnisse zeigten, bedingt durch die Baugröße der gewählten Permanentmagnete 31 ( Tesla ) oder in der Bauform von Elektromagneten 24.

Bei der Bauausführung des Drilling - Motor - Generators in Kompaktbausatz mit getakteten Triacs ( bididrektionale ) Thyristortrioden wird bei diesem einzeln radial und axial getrennten Motor - Generator - Typ im Läufer 23, der mit Permanentmagneten 31 bestückt ist, ein großes Anzugsmoment durch die vorstehend be- schriebene Anordnung ausgelöst.

- 14 -

Die rhytmische Funktion des Drilling - Motor - Generators wird durch die Taktung des Triacssystems gewährleistet. Bei dem getakteten Zeitpunkt des Läufers 23 werden kleine Anzugsströme verwendet, um ein optimales Drehmoment auszulösen.

Die Paketkerne 32 werden aus lamellierten Blechen 16 zusammengesetzt.

Der Läufer 23, in Figur 5 dargestellt, besitzt aufgeprägte Pole mit massiven oder mit lamelliert geblechten Polkernen.

Die vorgenannten Pole können in Verwendung von Permanentmagneten 31 ausgeführt werden, da diese einen sehr hohen Sättigungsgrad ( Tesla ) aufweisen.

Dieser neugestaltete, durch das getaktete Programm und durch die in sich getrennten Funktionen abwechselnd, gleichzeitig wirkende Motor - Generator erfüllt die Umwandlung von mechanischer Energie in elektrische Energie durch enorme Einsparung an fremdaufgewandter mechanischer Energie.

Der jeweilig in Funktion getretene Rotor übt durch seine eigene, ohne Last, selbst erzeugte Spannung eine Kraft auf das jeweilig getaktete Drehmoment aus.

- 15 -

PATENTANSPRÜCHE:
================

1. Drilling - Motor - Generator in Kompaktbausatz
mit getakteten Triacs ( bidirektionale ) Thyristortrioden, bestehend aus drei unabhängig von
einander arbeitenden Generatoren radial sowie
im gleichen Bezugssystem drei radial wirkende
Motoren.

Der Patentanspruch ist dadurch gekennzeichnet,
daß die drei Teilgeneratoren und die drei
Teilmotoren ( 26, 27 und 28 ) im periodischen
Ablauf wechslungsweise 120 Grad beziehungsweise 135 Grad austauschend die Funktion des Motor - Generators aufweisen.

2. Drilling - Motor - Generator nach Patentanspruch 1, dadurch gekennzeichnet, daß die
sechs axialen Ständer ( 5, 6, 7, 8, 9, 10 )
in den getrennten Jochfeldern unter Zusammenwirkung mit den radialen Ständern ( 11, 12, 13 )
und durch die getrennten Jochfeldringe ( 21 )
eine gemeinsame elektrische Induktionsspannung
sinusförmig auftreten lassen.

3. Drilling - Motor - Generator nach den vorhergehenden Patentansprüchen dadurch gekennzeichnet, daß die drei radialen Generatorteile und
die drei axialen Generatorteile rhytmisch getaktet werden durch die ( bidirektionale )
Thyristortriodenschaltung ( 29 ) und zeitpunktmäßig die Ausnützung des Drehmoment in den
drei Radialmotoren und in den drei Axialmotoren

- 16 -

gewährleisten. Durch diesen Vorgang der Taktung von 120 Grad beziehungsweise 135 Grad bleibt die Gleichwirkung - synchron - von Motor und Generator konstant.

4. Drilling - Motor - Generator nach den vorhergehenden Patentansprüchen dadurch gekennzeichnet, daß durch diesen rhytmischen Vorgang und durch die Ausnutzung des Drehmoments im jeweiligen Zeitpunkt, wenn Generatorteil unter Last liegt, der Mehraufwand von mechanischer Fremdenergie reduziert wird.

5. Drilling - Motor - Generator nach den vorhergehenden Patentansprüchen dadurch gekennzeichnet, daß durch die Taktung der ( bidirektionalen ) Thyristortrioden dieser Vorgang enorme Einsparungen von mechanischer Fremdenergie ermöglicht, und durch die Verwendung von Permanentmagneten ( 31 ) bestückten Läufern ( 23 ) in diesem Drillingssystem, bei zwei Funktionen Haft- und Abrißmoment neutralisiert sind. Der dritte Teil liegt im 15-Grad-Drehmoment-Vorlauf.

6. Drilling - Motor - Generator nach den vorhergehenden Patentansprüchen dadurch gekennzeichnet, daß bei diesem Motor - Generator ein spezielles Takt-Schaltverfahren durch Drehzahlregelung und Zeitabstimmung der Induktionsspannung und Weiterleitung phasenverschoben um 120 Grad entwickelt, um die Taktbestimmung für den Motorteil, der bereits 15 Grad im Drehmoment liegt, zu bewirken.

Diese ( bidirektionale ) Thyristortriodenschaltung ( 29 ), die speziell für diese
Taktung des Drilling - Motor - Generators
ausgeführt wird, und nur für diesen Auslösungsvorgang zu verwenden ist.

7. Drilling - Motor - Generator nach den vorhergehenden Patentansprüchen dadurch gekennzeichnet, daß durch diese ( bidirektionale )
Thyristortriodenschaltung ( 29 ), hervorgerufen durch die Taktung und durch den Aufbau
des Systems, eine enorme Einsparung von mechanischer Energie erreicht wird.
Dadurch kann ein neuer Energieträger genutzt
werden.

8. Drilling - Motor - Generator nach den vorhergehenden Patentansprüchen dadurch gekennzeichnet, daß bei dieser Steuerungselektronik
durch Drehzahlregelung, Zeittaktung und Austausch der drei Radial-Drehmomente und der
drei Axial-Drehmomente ein Kompaktbausatz erstellt wurde, der speziell für Steuerungsanschlüsse und Leistungsanschlüsse optimal für
dieses Drilling - Motor - Generator - Programm
ausgelegt ist.
Jede erforderliche Motor - Drehzahl kann bestimmt werden.

0054081

$\frac{1}{10}$

GESIG
Energie-Technik GmbH
854 Schwabach

GESIG
Energie-Technik GmbH
854 Schwabach

Fig 2

Generator 1

Generator 2

Generator 3

18

19

17

15

16

20

22

31

21

Fig. 3.1

4/10

31  20  21  14  15  23  27

GESIG
Energie-Technik GmbH
854 Schwabach

Fig 4

Fig. 5

Fig 6

Fig. 7

GESIG
Energie-Technik GmbH
854 Schwabach

Fig 8

Fig. 9

Die 15° Überlagerung wechselt sich im Drehmoment ab

Fig. 10

0054081

0054081

| Europäisches Patentamt | **EUROPÄISCHER RECHERCHENBERICHT** |
|---|---|

EP 80 10 7942.7

| **EINSCHLÄGIGE DOKUMENTE** | | | **KLASSIFIKATION DER ANMELDUNG (Int. Cl.³)** |
|---|---|---|---|
| Kategorie | Kennzeichnung des Dokuments mit Angabe, soweit erforderlich, der maßgeblichen Teile | betrifft Anspruch | |
| | US – A – 4 091 313 (S. GENOVESE) \* gesamte Schrift \* -- | 1-8 | H 02 K 57/00 |
| A | US – A – 3 611 091 (S. GENOVESE) \* Fig. 2 \* ---- | | |

**RECHERCHIERTE SACHGEBIETE (Int. Cl.³)**

H 02 K 16/00
H 02 K 29/00
H 02 K 47/00
H 02 K 57/00

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Berlin | 02-11-1981 | GESSNER |

EPA form 1503.1   06.78